Europäisches Patentamt

European Patent Office

Office européen des brevets

(19)

(11) Veröffentlichungsnummer: **0 068 114**
**A1**

(12) **EUROPÄISCHE PATENTANMELDUNG**

(21) Anmeldenummer: **82103973.2**

(22) Anmeldetag: **07.05.82**

(51) Int. Cl.³: **F 16 C 3/06**

(30) Priorität: **30.06.81 DE 3125590**

(43) Veröffentlichungstag der Anmeldung: **05.01.83**
Patentblatt 83/1

(84) Benannte Vertragsstaaten: **DE FR GB IT**

(71) Anmelder: **AUDI NSU AUTO UNION**
**AKTIENGESELLSCHAFT, D-7107 Neckarsulm (DE)**

(72) Erfinder: **Indra, Fritz, Dr., Talstrasse 25,**
**D-8938 Buchloe/Lindenberg (DE)**

(74) Vertreter: **Le Vrang, Klaus, AUDI NSU AUTO UNION**
**Aktiengesellschaft Postfach 220, D-8070 Ingolstadt (DE)**

(54) **Kurbelwelle.**

(57) Die Erfindung betrifft eine Kurbelwelle für mehrzylindrige Kolbenmaschinen, insbesondere für Hubkolben-Brennkraftmaschinen mit mehreren Hubzapfen und Lagerzapfen, die durch Kurbelwangen miteinander verbunden sind. Zur Verringerung des Gewichtes der Kurbelwelle sind die Widerstandsmomente der Kurbelwangen zumindest annähernd proportional zu den im Betrieb auftretenden Belastungen ausgelegt.

0068114

# AUDI NSU AUTO UNION

Aktiengesellschaft

Ingolstadt, den 25. Juni 1981
IP 1735     Za/Dö

## Kurbelwelle

Die Erfindung betrifft eine Kurbelwelle für mehrzylindrige K_lben-
maschinen, insbesondere Hubkolben-Brennkraftmaschinen, gemäß dem
Oberbegriff des Patentanspruches 1.

Kurbelwellen von Kolbenmaschinen, insbesondere von schnellaufenden
Hubkolben-Brennkraftmaschinen, sind neben dem Antriebs- oder Abtriebsdrehmoment hoher Biege- und Schwingungsbeanspruchungen ausgesetzt und dementsprechend fest und schwer ausgebildet. Um trotzdem
Material und Gewicht einzusparen, ist es z.B. bekannt(DE-OS 27 06 072)
im Bereich der Hub- und Lagerzapfen materialschwächende Ausnehmungen
vorzusehen. Die Ausnehmungen sind dabei so ausgebildet, daß die
zwischen Hubzapfen und Lagerzapfen befindlichen Kurbelwangen ein
ausreichendes Widerstandsmoment behalten.

Aufgabe der Erfindung ist die Schaffung einer gattungsgemäßen Kurbelwelle, welche bei einer ausreichenden Betriebsfestigkeit ein
geringeres Gewicht aufweist.

Diese Aufgabe wird erfindungsgemäß mit den kennzeichnenden Merkmalen des Patentanspruches 1 gelöst. Während bei herkömmlichen Kurbelwellen die Kurbelwangen bezüglich ihres Widerstandsmomentes gleich
oder nur im Hinblick auf den Massenausgleich unterschiedlich gestaltet sind, schlägt der Erfinder unterschiedliche Widerstandsmomente
der Kurbelwangen vor, die proportional zu den im Betrieb der Kurbelwelle auftretenden Belastungen an den einzelnen Kurbelwangen sind.
Diese Belastungen setzen sich aus den auftretenden Drehmomenten,
den insbesondere von den Kolben und Pleueln bewirkten Biegemomenten und den Schwingungsbelastungen zusammen. Diese Belastungen können rechnerisch, meßtechnisch und/oder in Versuchen ermittelt werden. Entsprechend diesen Belastungen werden dann die Kurbelwangen
derart ausgelegt, daß deren Widerstandsmoment zumindest annähernd
proportional zu diesen Belastungen ist. Erfindungsgemäß werden somit
überproportionierte Kurbelwangen, wie dies bei symmetrisch aufgebauten Kurbelwellen zwangsläufig der Fall ist, vermieden. Da die ein
geringeres Widerstandsmoment aufweisenden Kurbelwangen kleinere
Volumina aufweisen können, kann bis zu 20 % an Gewicht und Material
eingespart werden, ohne daß die Betriebsfestigkeit der Kurbelwelle
nachteilig beeinträchtigt wird.

Da mit dem geringeren Gewicht der einzelnen Kurbelwangen auch der
rotierende Anteil der Massenkräfte der Kurbelwelle abnimmt, können
ggf. auch die an den Kurbelwangen befindlichen Ausgleichsgewichte
verringert werden.

In einer einfachen, beispielsweise für eine Vierzylinder-Hubkolben-
Reihenbrennkraftmaschine zutreffenden Version kann die Kurbelwelle
gemäß Patentanspruch 2 ausgebildet sein. Die Kurbelwangen weisen
dementsprechend ein gezieltes, vom An- oder Abtrieb der Kurbelwelle
weg abnehmendes Widerstandsmoment auf, welches angenähert der Spannungsbelastung der Kurbelwangen entspricht. Dabei ist berücksichtigt,
daß sowohl das An- oder Abtriebsmoment als auch die Schwingungsbelastung vom abtriebsseitigen Ende der Kurbelwelle weg abnimmt, während die Biegemomente annähernd gleichmäßig auf die Kurbelwangen
wirken.

Es versteht sich jedoch, daß abhängig von den Konstruktionsmerkmalen und den Betriebsparametern auch andere Belastungen auftreten können und damit eine andere Verteilung des Widerstandsmomentes der Kurbelwangen erforderlich ist. Beispielsweise kann bei der Verwendung eines Drehschwingungsdämpfers an dem dem An- oder Abtrieb entgegengesetzten Ende der Kurbelwelle die Belastung an diesem Ende wieder zunehmen, so daß die mittleren Kurbelwangen ein geringeres Widerstandsmoment als die äußeren Kurbelwangen aufweisen können. Auch die Anzahl und Anordnung der Lagerzapfen, die Zündfolge der Brennkraftmaschine, die Anzahl der Hubzapfen und das spezifische Schwingungsverhalten der Kurbelwelle sind maßgebliche Faktoren, die von Fall zu Fall eine andere Belastung und dementsprechend eine andere Verteilung des Widerstandsmomentes der einzelnen Kurbelwangen erfordern.

Die Kurbelwangen können zweckmäßig gemäß den Patentansprüchen 3 bis 5 in ihrer Konfiguration unterschiedlich ausgebildet sein und somit unterschiedliche Widerstandsmomente aufweisen. Trotz der erzielbaren Material- und Gewichtseinsparung wird dadurch die Kurbelwelle nicht verkompliziert, so daß herstellungstechnisch kaum Nachteile entstehen.

Ein Ausführungsbeispiel der Erfindung ist im Folgenden mit weiteren Einzelheiten näher erläutert. Die Zeichnung zeigt in

Fig. 1     eine erfindungsgemäße Kurbelwelle für eine Vierzylinder-Hubkolben-Reihenbrennkraftmaschine in schematischer Darstellung,

Fig. 2      ein Belastungsdiagramm dieser Kurbelwelle,

Fig. 3      die Kurbelwelle in einem Querschnitt gemäß Linie III-III
der Fig. 1,

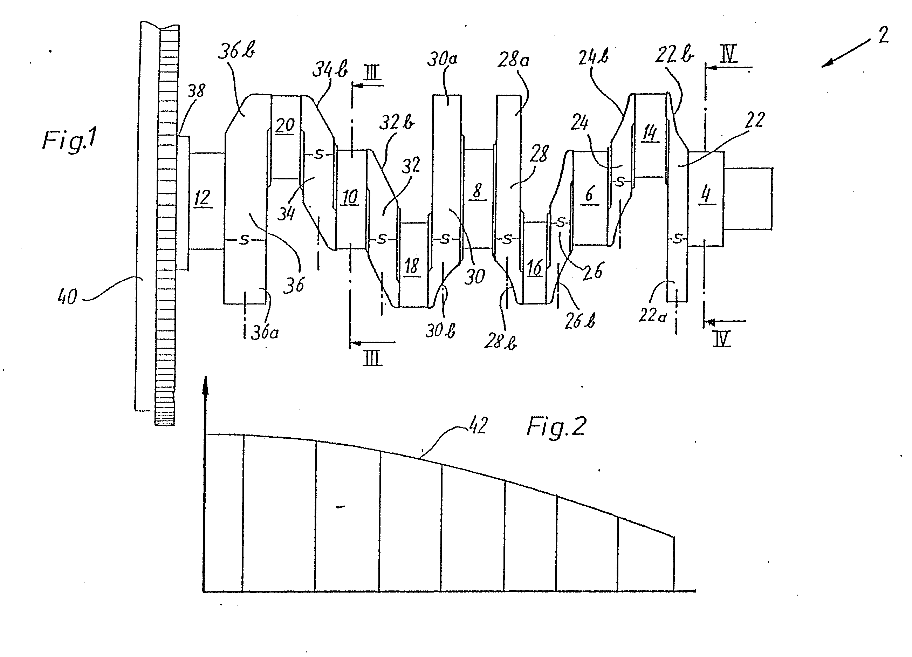

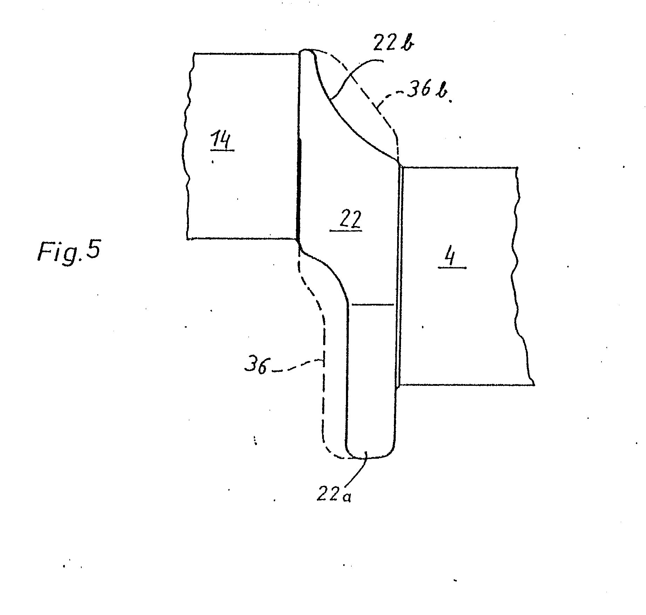

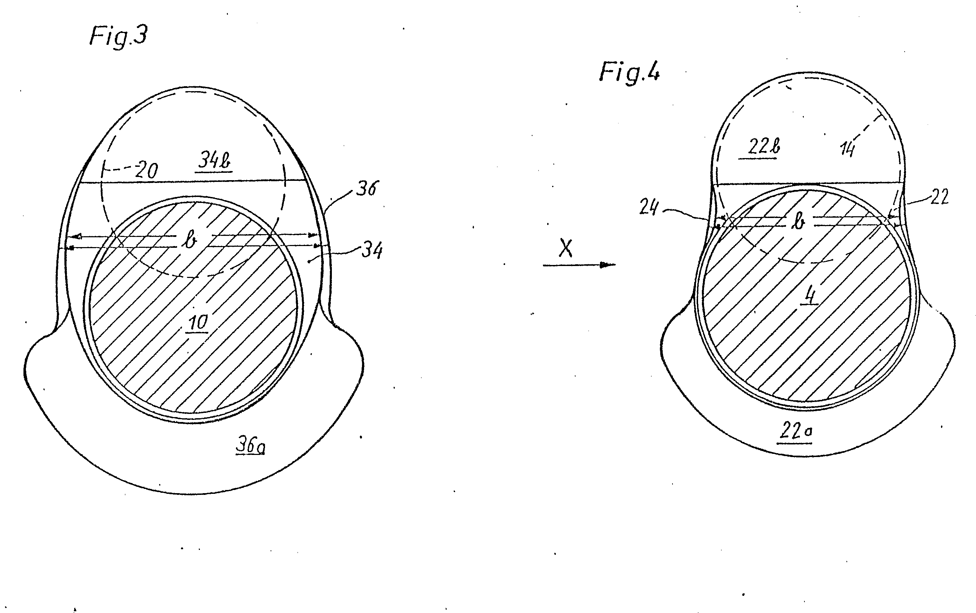

Fig. 4      eine weitere Schnittansicht gemäß Linie IV-IV der Fig. 1
und

Fig. 5      eine Ansicht in Richtung des Pfeiles X der Fig. 4.

Die in der Zeichnung dargestellte Kurbelwelle 2 setzt sich im wesentlichen aus fünf Lagerzapfen 4, 6, 8, 10, 12, vier Hubzapfen 14,
16, 18, 20 und jeweils zwischen Hubzapfen und Lagerzapfen befindlichen Kurbelwangen 22, 24, 26, 28, 30, 32, 34, 36 zusammen. An die
Kurbelwangen 22, 28, 30, 36 sind Ausgleichsgewichte 22a, 28a, 30a
und 36a für den Massenausgleich des Kurbeltriebes angeformt. Es
versteht sich, daß die in der schematischen Darstellung ungleichen
Abstände zwischen den Hubzapfen in der konstruktiven Ausbildung
entsprechend den tatsächlichen Zylinderabständen der Brennkraftmaschine ausgerichtet ist.

Am einen Ende 38 der Kurbelwelle 2 ist ein Schwungrad 40 befestigt,
über welches die wirkenden An- und Abtriebsmomente eingeleitet bzw.
abgenommen werden.

Die Kurbelwangen sind so gestaltet, daß deren Widerstandsmoment
proportional zu der in der Fig. 2 dargestellten, ungefähren Belastungskurve 42 vom An- bzw. Abtrieb der Kurbelwelle 2 (Ende 38)
weg abnimmt.

In dem Belastungsdiagramm ist die aus den Drehmomenten, den Biegemomenten und den Schwingungsbelastungen gebildete Gesamtbelastung
über die Länge der Kurbelwelle 2 aufgetragen. Der größten Belastung
unterliegt somit die am Ende 38 befindliche Kurbelwange 36, so daß
diese das größte Widerstandsmoment aufweisen muß.

Diese größte Belastung resultiert einerseits aus dem Schwingungsverhalten der Kurbelwelle 2, deren Schwingungsknoten etwa beim Lagerzapfen 12 liegt, und andererseits aus dem sich über die Hubzapfen 14, 16, 18, 20 addierenden Drehmomenten bzw. An- oder Abtriebsmomenten zuzüglich der in diesem Bereich auftretenden Biegemomente.

Das unterschiedliche Widerstandsmoment der einzelnen Kurbelwangen
ist durch eine unterschiedliche Dicke s, eine unterschiedliche Breite b und durch unterschiedliche Volumina der sich zu den Hubzapfen
verjüngenden Bereiche 22b, 24b, 26b, 28b, 30b, 32b, 34b, 36b der
Kurbelwangen 22 bis 36 gebildet.

Wie aus der Fig. 1 und 5 ohne weiteres ersichtlich ist, nehmen sowohl die Voluminas der sich verjüngenden Bereiche 22b bis 36b der
Kurbelwangen 22 bis 36 als auch deren Dicke s kontinuierlich vom
Ende 38 weg ab, so daß das Volumen des Bereiches 36b der Kurbelwange
36 und deren Dicke s am größten, hingegen das Volumen des Bereiches
22b der Kurbelwange 22 und deren Dicke s am kleinsten ist (siehe
insbesondere Fig. 5, die gestrichelte Linie stelle die Kurbelwange
36 dar):

Zusätzlich ist die Breite b der Kurbelwangen 22 bis 36 (siehe Fig.
3 und 4) vom Ende 38 der Kurbelwelle 2 weg abnehmend ausgebildet,
wodurch sich ebenfalls ein abnehmendes Widerstandsmoment ergibt.

Durch diese Maßnahmen wird eine bezüglich der Gesamt-Belastung der Kurbelwelle annähernd gleiche, spezifische Spannungsbelastung der Kurbelwangen erreicht, welche trotz der Einsparung von Material und Gewicht eine unverminderte Betriebsfestigkeit der Kurbelwelle 2 sichert. Durch die Gewichtsverminderung der im Widerstandsmoment verringerten Kurbelwangen können auch die an diese Kurbelwangen

Es versteht sich, daß die zur Verringerung des Widerstandsmomentes der Kurbelwangen dargestellten Maßnahmen auch in einer anderen Kombination oder einzeln angewendet sein können. Beispielsweise kann es ausreichend sein, nur die Breite b, die Dicke s oder die Volumina der sich verjüngenden Bereiche unterschiedlich zu gestalten. Obwohl die Erfindung anhand einer Kurbelwelle mit vier Hubzapfen beschrieben wurde, ist sie selbstverständlich auch auf Kurbelwellen mit mehr oder weniger Hubzapfen und mit anderen Belastungskurven anwendbar.

0068114

# AUDI NSU AUTO UNION
Aktiengesellschaft

Ingolstadt, den 25. Juni 1981
IP 1735     Za/Dö

## Kurbelwelle

P a t e n t a n s p r ü c h e :

1. Kurbelwelle für mehrzylindrige Kolbenmaschinen, insbesondere für Hubkolben-Brennkraftmaschinen, mit mehreren Hubzapfen und Lagerzapfen, die durch Kurbelwangen miteinander verbunden sind, d a d u r c h  g e k e n n z e i c h n e t , daß die Widerstandsmomente der Kurbelwangen (22 bis 36) zumindest annähernd proportional zu den im Betrieb auftretenden Belastungen sind.

2. Kurbelwelle nach Anspruch 1, bei der ein An- und/oder Abtriebsmoment an einem Ende einleitbar bzw. abnehmbar ist, d a d u r c h  g e k e n n z e i c h n e t , daß die Kurbelwangen von dem das An- oder Abtriebsmoment aufnehmenden bzw. abgebenden Ende (39) weg mit abnehmendem Widerstandsmoment ausgebildet sind.

3. Kurbelwelle nach den Ansprüchen 1 und 2, d a d u r c h  g e - k e n n z e i c h n e t , daß die Dicke s der Kurbelwangen (22 bis 36) unterschiedlich ist.

4. Kurbelwelle nach den Ansprüchen 1 und 2, d a d u r c h  g e - k e n n z e i c h n e t , daß die Breite b der Kurbelwangen (22 bis 36) unterschiedlich ist.

5. Kurbelwelle nach den Ansprüchen 1 und 2, wobei die Kurbelwangen vom Lagerzapfen zum Hubzapfen im Querschnitt sich verjüngend

ausgebildet sind, d a d u r c h   g e k e n n z e i c h n e t ,
daß die sich verjüngenden Bereiche (22b bis 36b) der Kurbelwangen (22 bis 36) unterschiedliche Volumina aufweisen.

Fig.1

Fig.2

Fig.5

00.68.1.14

Fig.3

20    34b

36

b

34

10

36a

X →

Fig.4

22b    14

24    22

b

4

22a

0068114

0068114

Europäisches Patentamt

**EUROPÄISCHER RECHERCHENBERICHT**

Nummer der Anmeldung

EP 82 10 3973

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | DE-C- 678 539 (RUMPLER) * Seite 1, Zeilen 40-55; Seite 2, Zeilen 34-47; Figur 1 * | 1,2 | F 16 C 3/06 |
| X | FR-A- 733 651 (ANDREAU) * Seite 1, Zeilen 47-50 * | 1-3 | |
| A | FR-A-2 380 460 (DAIMLER-BENZ) & DE - A - 2 706 072 (Cat. D) | | |

| | |
|---|---|
| | RECHERCHIERTE SACHGEBIETE (Int. Cl. 3) |
| | F 16 C |

Der vorliegende Recherchenbericht wurde für alle Patentansprüche erstellt.

| Recherchenort | Abschlußdatum der Recherche | Prüfer |
|---|---|---|
| DEN HAAG | 07-10-1982 | BARON C. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82